# FASCICULE DE BREVET EUROPEEN

(11) **EP 1 249 812 B1**
(45) Date de publication et mention de la délivrance du brevet: **28.01.2004**
(21) Numéro de dépôt: 02290251.4
(22) Date de dépôt: 04.02.2002
(51) Int. Cl.: G08G 5/00, G01C 23/00

(54) **Dispositif de révision du plan de vol d'un aéronef**
Vorrichtung für die Revision des Flugplans eines Flugzeugs
Device for the revision of the flight plan of an aeroplane

(30) Priorité: 26.02.2001 FR 0102565
(43) Date de publication de la demande: 16.10.2002
(73) Titulaire: AIRBUS FRANCE, 31060 Toulouse (FR)
(72) Inventeur: Lafon, Jean-François, 31000 Toulouse (FR); Ferro, Daniel, 31600 Muret (FR)
(74) Mandataire: Hauer, Bernard

(56) Documents cités:
- CA-A- 2 312 559
- US-A- 4 642 775
- US-A- 5 340 061
- US-A- 6 161 063
- US-B1- 6 181 987

## Description

La présente invention concerne un dispositif de révision du plan de vol d'un aéronef, notamment d'un avion de transport.

On sait que le dialogue entre un pilote d'un aéronef et des systèmes dudit aéronef, en particulier le système de gestion de vol FMS ("Flight Management System"), peut être réalisé par l'intermédiaire d'une console MCDU d'affichage et d'entrée de données ("Multipurpose Control and Display Unit").

Cette console MCDU est notamment utilisée pour réaliser une révision du plan de vol de l'aéronef. A cet effet, cette console MCDU comporte, en particulier au moins :
- des moyens d'affichage susceptibles de présenter, sur au moins un écran de visualisation, une page de plan de vol comprenant un plan de vol qui comporte au moins des points de route que doit survoler l'aéronef, des informations (altitude, vitesse, ...) relatives à ces points de route, ainsi que des informations concernant des segments entre les points de route ; et
- des moyens de révision actionnables, permettant de réaliser une révision du plan de vol et comprenant au moins :
   . des premiers moyens de commande permettant d'accéder à des pages de révision, à partir desquelles on peut réaliser des révisions ; et
   . des seconds moyens de commande pour réaliser ces révisions à partir desdites pages de révision.

De façon usuelle, la révision d'un plan de vol peut consister à supprimer ou rajouter des points de route, à modifier la position de points de route ou de caractéristiques (temps, vitesse, altitude) relatives à ces points de route ou auxdits segments.

Généralement, une telle console MCDU est basée, en ce qui concerne l'interaction avec un opérateur, sur la technologie connue dite de "clés de ligne". On sait qu'avec une telle technologie, le nombre d'actions possibles à partir d'une page qui est présentée sur l'écran de visualisation est limité au nombre de clés de ligne. A partir d'une page, les commandes, les saisies de données et les accès à d'autres pages, qui sont disponibles par appui sur une clé de ligne, sont indiqués sur la ligne correspondant à la clé. L'accès à des informations ou à des commandes supplémentaires rend donc nécessaire l'ouverture d'une nouvelle page, remplaçant la précédente. Par conséquent, une page contenant beaucoup de commandes contient peu d'information et une page contenant beaucoup d'information ne peut proposer que peu de commandes. La présentation des informations d'une page est contrainte par cette mécanisation. Le nombre de pages est donc très important et la navigation entre les pages impose une arborescence complexe.

En ce qui concerne la révision du plan de vol, avec une telle console MCDU, les modifications se font à partir d'un point de route. Les modifications possibles à partir d'un point de route sont effectuées dans des pages de révision, spécifiques à chaque révision. Ces pages de révision sont accessibles à partir de deux pages intermédiaires, l'une présentant les révisions latérales, l'autre présentant les révisions verticales.

Par conséquent, il est nécessaire de passer par une page intermédiaire pour accéder aux pages de révision. De plus, ceci est le seul et unique accès possible auxdites pages de révision. En outre, ladite page intermédiaire est différente selon que l'on désire réaliser une révision latérale ou une révision verticale.

Par ailleurs, les évolutions du dialogue entre un pilote d'un aéronef et des systèmes dudit aéronef, réalisé par l'intermédiaire d'une console MCDU d'affichage et d'entrée de données, ne sont pas aisées, car l'introduction de nouvelles informations et/ou de nouvelles commandes rend très souvent nécessaire de créer de nouvelles pages et de changer l'arborescence des pages.

Par le document FR-2 677 149, on connaît un procédé et un dispositif permettant de remédier à certains inconvénients d'une telle console MCDU, essentiellement en ce qui concerne la révision du plan de vol, et plus particulièrement aux inconvénients suivants de la console MCDU :
- l'obligation de devoir entrer des caractères sur un clavier alphanumérique pour modifier le plan de vol ; et
- le fait d'avoir à surveiller deux écrans, à savoir l'écran de la console MCDU qui est de type "tête basse" et celui de type "tête haute" de l'afficheur ND ("Navigation Display") du système de gestion de vol, sur lequel est représenté le tracé de la route de l'avion qui est élaboré dans un plan horizontal à partir de points de route que le pilote a sélectionnés lors de la préparation du vol.

Pour ce faire, ce document connu FR-2 677 149 réalise un couplage entre les deux équipements précités, qui permet d'obtenir sur un unique écran de visualisation (l'écran de l'afficheur ND), en plus de la représentation géographique du plan de vol initialement sélectionné par le pilote (c'est-à-dire du tracé précité de la route de l'avion) :
- une zone sensible associée à chaque point de l'écran ;
- des plages de fonction relatives à quatre modes différents de révision, à savoir :
   . un mode pour insérer un nouveau point dans le plan de vol ;
   . un mode pour définir un point vers lequel l'aéronef doit se diriger à partir de sa position actuelle ;
   . un mode pour effacer un point ; et
   . un mode pour supprimer une discontinuité ; et
- un index lumineux, dont les déplacements sur l'écran sont commandés par une action du pilote sur un dispositif de désignation, de manière à pouvoir amener l'index sur une plage ou une zone sensible, l'activation de la fonction correspondant à cette plage ou la sélection d'un point de ladite zone étant obtenue par une action du pilote sur un organe de validation.

L'activation d'une plage de fonction permet d'accéder au mode de révision relatif à cette plage de fonction, tandis que l'activation d'une zone sensible d'un point de l'écran permet de prendre en compte ce point dans le tracé de la route. Ainsi, il n'est plus nécessaire d'entrer des données alphanumériques pour désigner un point de route et l'introduire dans ledit tracé.

Toutefois, par le couplage des deux équipements ND et MCDU, c'est le tracé de la route initialement visualisé sur l'afficheur ND qui est pris en compte, et non pas le plan de vol de la console MCDU, pour mettre en oeuvre l'un des modes de révision précités.

De plus, ce dispositif connu ne permet pas d'accéder à des pages de révision. En effet, seuls les quatre modes de révision précités sont accessibles à partir de la première page et, de plus, l'accès à ces différents modes conserve toujours sur l'écran le tracé de la route de sorte que les modes affichés ne correspondent pas aux pages de révision usuelles précitées (telles qu'elles existent sur la console MCDU).

Le brevet US 6 181 987 B1 décrit un dispositif de révision du plan de vol d'un aéronef, comportant un écran de visualisation sur lequel une fenêtre graphique montrant le plan de vol et une fenêtre alphanumérique sont affichées, l'écran visualisant en outre une touche pour sélectionner un plan de vol révisionné.

La présente invention a pour objet de remédier à ces inconvénients. Elle concerne un dispositif de révision du plan de vol d'un aéronef, présentant un accès amélioré (plus facile et plus varié) aux pages de révision.

A cet effet, selon l'invention, le dispositif de révision du plan de vol d'un aéronef, notamment d'un avion de transport, ledit dispositif comportant au moins :
- des moyens d'affichage susceptibles de présenter, sur au moins un écran de visualisation, une page de plan de vol comprenant un plan de vol qui comporte au moins des points de route que doit survoler l'aéronef, ainsi que des informations concernant ces points de route ; et
- des moyens de révision actionnables, permettant de réaliser une révision dudit plan de vol et comprenant au moins :
   . des premiers moyens de commande permettant d'accéder à des pages de révision, à partir desquelles on peut réaliser des révisions ; et
   . des seconds moyens de commande pour réaliser ces révisions à partir desdites pages de révision,
ledit écran de visualisation comportant au moins une fenêtre interactive, comprenant des objets sensibles à la présence d'un curseur, lesdits premiers moyens de commande étant formés de manière à pouvoir désigner un objet sensible et le valider, et lesdits moyens d'affichage étant formés de sorte que la page de plan de vol, qui est susceptible d'être présentée sur ledit écran de visualisation, comporte de plus :
- au moins un signe caractéristique, indiquant un menu de révision ;
- des premiers objets sensibles qui correspondent à des objets sensibles relatifs à un menu de révision déroulant et qui sont prévus au niveau desdits points de route et dudit signe caractéristique, la désignation et la validation d'un desdits premiers objets sensibles commandant automatiquement le déroulement sur la page de plan de vol dudit menu de révision déroulant ; et
- des deuxièmes objets sensibles qui correspondent à des objets sensibles associés respectivement à des pages de révision particulières et qui sont prévus sur ledit menu de révision lorsqu'il est déroulé, la désignation et la validation d'un desdits deuxièmes objets sensibles commandant automatiquement l'accès à la page de révision qui est associée à ce deuxième objet sensible.

Ainsi, grâce à l'invention, on peut accéder aux pages de révision à la fois par ledit signe caractéristique (indiquant le menu de révision) et par lesdits points de route, à partir de la page de plan de vol. De plus, cet accès est direct, sans passer par une page intermédiaire.

En outre, l'utilisation d'un menu (de révision) déroulant présente un double avantage :
- lorsqu'il n'est pas déroulé, son encombrement sur la page de plan de vol est réduite audit signe caractéristique ; et
- lorsqu'il est déroulé, il permet de faire apparaître un grande nombre de deuxièmes objets sensibles permettant l'accès aux différentes pages de révision.

Par ailleurs, le dispositif conforme à l'invention est facilement évolutif par de simples modifications logicielles. De plus, le nombre de commandes de fonctions différentes à partir d'une page n'est pas limité par des caractéristiques matérielles, telles que des "clés de ligne" par exemple.

Dans le cadre de la présente invention, on entend par "fenêtre interactive" une fenêtre qui comporte des objets sensibles (points, plages, valeurs alphanumériques, ...) qui sont associés respectivement à des fonctions particulières (déroulement d'un menu déroulant, apparition sur l'écran d'une page de révision, ...) et qui sont, de préférence, sensibles à la présence d'un curseur. Ledit curseur peut être déplacé par un moyen approprié qui est actionnable par un opérateur de l'aéronef, de manière à pouvoir être amené sur un objet sensible afin de le désigner ou le marquer.

Lorsqu'un objet sensible est désigné, c'est-à-dire lorsque le curseur est amené sur lui, ledit objet sensible est marqué ou mis en évidence, en particulier par un changement d'apparence tel qu'un changement de couleur ou un surbrillance par exemple. On dit que ledit objet sensible est alors muni d'un "marqueur d'objet" ou "focus". La validation (à l'aide d'un moyen approprié actionnable) d'un objet sensible qui est muni d'un tel marqueur d'objet déclenche l'exécution de la fonction qui est associée audit objet sensible.

Aussi, dans un mode de réalisation préféré, lesdits premiers moyens de commande permettant d'accéder à des pages de révision, comportent :
- au moins un moyen de déplacement actionnable, susceptible de déplacer un curseur sur ladite fenêtre interactive de manière à désigner un objet sensible ; et
- au moins un moyen de validation actionnable, susceptible de valider un objet sensible qui est désigné par l'intermédiaire dudit curseur de manière à faire exécuter la fonction qui est associée audit objet sensible.

De façon avantageuse, lesdits moyens d'affichage sont formés de sorte :
- qu'une page de révision, à laquelle on accède par la désignation et la validation du premier objet sensible qui est associé audit signe caractéristique relatif au menu de révision, ne comporte aucun point de route présélectionné. L'accès à une page de révision sans préciser de point de route est parfois intéressant en pratique, notamment lorsque les révisions ne sont pas liées à un point de route particulier ; et/ou
- qu'une page de révision, à laquelle on accède par la désignation et la validation d'un premier objet sensible qui est associé à un point de route particulier dudit plan de vol, comporte une présélection de ce point de route. Ceci permet d'éviter des erreurs de sélection ou de saisie du point de route.

En outre, avantageusement, lesdits moyens d'affichage sont formés de sorte que la page de plan de vol comporte, de plus, des troisièmes objets sensibles qui sont prévus au niveau d'au moins certaines desdites informations (altitude, ...) concernant les points de route et qui correspondent à des objets sensibles associés respectivement à des pages de révision particulières, à partir desquelles on peut réaliser la révision de ces informations. Par conséquent, la désignation et la validation d'un desdits troisièmes objets sensibles commandent automatiquement l'accès à la page de révision, à partir de laquelle on peut réaliser la révision de l'information qui est associée à ce troisième objet sensible.

Ainsi, un opérateur (pilote, copilote, ...) peut désigner en une seule action quel type de révision il veut entreprendre et sur quel point de route cette révision doit s'appliquer. Dans ce cas, l'accès aux pages de révision ne passe pas par le déroulement du menu déroulant précité.

Grâce à ces dernières caractéristiques (troisièmes objets sensibles), on réduit le nombre d'actions et on obtient une troisième manière d'accéder aux pages de révision.

Par ailleurs, de façon avantageuse, lesdits moyens d'affichage sont formés de sorte que la page de plan de vol comporte, de plus, des informations relatives à des segments entre des points de route et que les points de route sont présentés, successivement, dans un même sens (de préférence de haut en bas) sur une première colonne, et lesdites informations sont présentées successivement dans le même sens (de haut en bas) sur une seconde colonne.

Ceci facilite la lecture et la compréhension du plan de vol, notamment par rapport à la présentation usuelle qui est faite sur une console MCDU où les informations relatives à un segment entre deux points de route sont présentées sur une ligne intermédiaire entre deux lignes principales (présentant des informations concernant respectivement ces deux points de route).

La présente invention concerne également un système de dialogue d'aéronef, permettant de réaliser une pluralité d'actions, dont la révision du plan de vol.

Selon l'invention, ledit système de dialogue est remarquable en ce qu'il comporte les caractéristiques précitées du dispositif de révision du plan de vol et en ce que lesdits moyens d'affichage sont formés de manière à afficher sur l'écran de visualisation, de façon permanente et indépendamment de la page qui est présentée sur ledit écran de visualisation, au moins une barre de menu comportant une pluralité d'objets sensibles associés respectivement à des pages d'informations, la désignation et la validation d'un desdits objets sensibles commandant automatiquement un accès direct à la page d'informations qui est associée audit objet sensible.

Cette barre de menu, permanente et indépendante de la page qui est présentée, remplace les touches de fonction de la console MCDU, touches de fonction qui, on le sait, permettent d'accéder directement aux pages les plus fréquemment utilisées, mais sont limitées en nombre.

L'accès par une barre de menu permet de s'affranchir de cette limitation et de prévoir un accès direct à un plus grand nombre de pages. De plus, l'utilisation d'une telle barre de menu de type logiciel permet de faire évoluer la définition du système de dialogue conforme à l'invention, par l'intermédiaire de simples modifications logicielles.

Les figures du dessin annexé feront bien comprendre comment l'invention peut être réalisée. Sur ces figures, des références identiques désignent des éléments semblables.

La figure 1 représente le schéma synoptique d'un dispositif de révision du plan de vol conforme à l'invention.

Les figures 2 à 5 illustrent schématiquement différentes pages qui sont visualisées sur un écran du dispositif de révision du plan de vol, permettant de bien expliquer les différents accès possibles aux pages de révision, conformément à la présente invention.

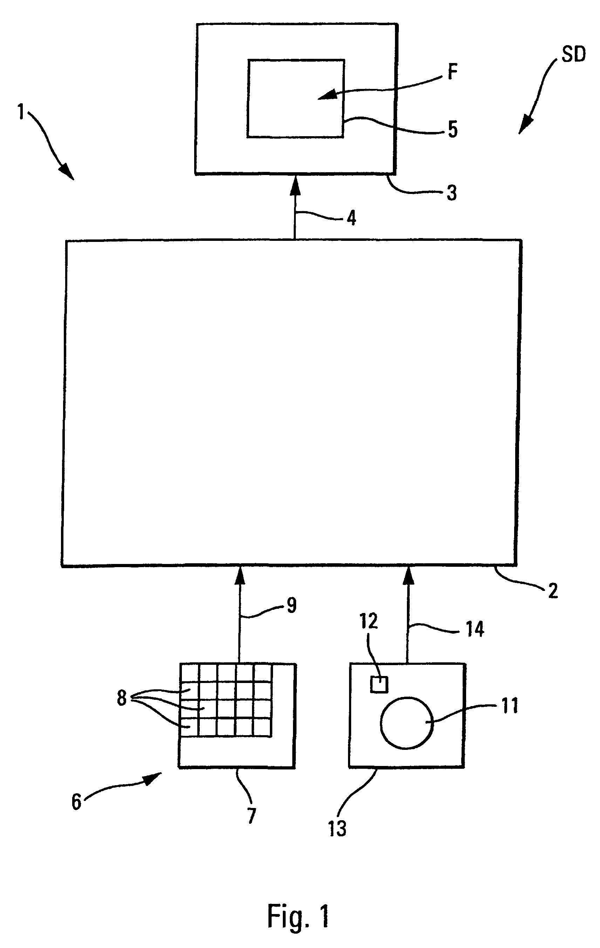

Le dispositif 1 conforme à l'invention et représenté schématiquement sur la figure 1 est destiné notamment à la révision du plan de vol d'un aéronef, en particulier un avion de transport civil, non représenté.

Ce dispositif 1 comporte, de façon usuelle :
- un calculateur 2 ;
- des moyens d'affichage 3 reliés par une liaison 4 audit calculateur 2 et susceptibles de présenter sur au moins un écran de visualisation 5 au moins une page de plan de vol PV précisée ci-dessous ; et
- des moyens de révision 6 qui sont actionnables par un opérateur et qui permettent à ce dernier de réaliser une révision du plan de vol.

De façon usuelle, ces moyens de révision 6 comprennent au moins :
- des premiers moyens de commande permettant d'accéder à des pages de révision, à partir desquelles on peut réaliser des révisions ; et
- des seconds moyens de commande qui comportent notamment un clavier 7 qui est muni d'une pluralité de touches 8 et qui est relié par une liaison 9 audit calculateur 2, pour réaliser ces révisions à partir desdites pages de révision.

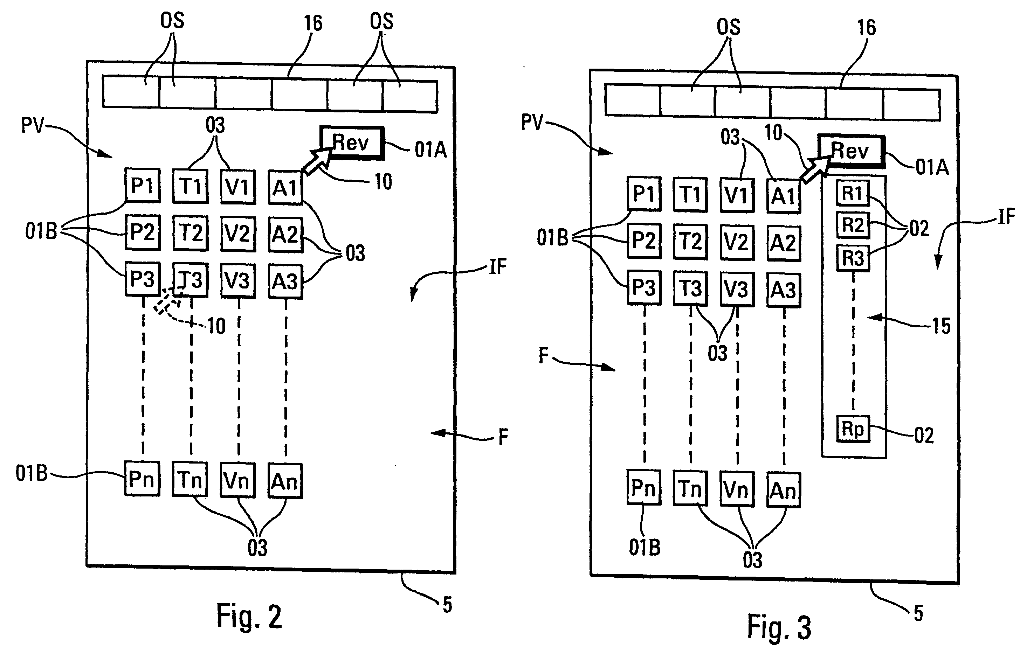

De façon usuelle, un plan de vol comprend, comme illustré partiellement sur les pages de plan de vol PV représentées sur les figures 2 à 5, au moins :
- des points de route P1 à Pn ;
- des informations relatives auxdits points de route P1 à Pn, telles que le temps T1 à Tn, la vitesse V1 à Vn et l'altitude A1 à An par exemple ; et
- des segments entre les points de route P1 à Pn, non représentés, mais précisés ci-dessous.

De plus, on sait que la révision d'un tel plan de vol peut consister, en particulier, à supprimer ou rajouter des points de route P1 à Pn, à modifier la position de points de route P1 à Pn ou de caractéristiques (telles que le temps, la vitesse ou l'altitude par exemple) relatives à ces points de route P1 à Pn ou auxdits segments.

Selon l'invention, ledit écran 5, de préférence un écran LCD à cristaux liquides ("Liquid Crystal Display"), comporte au moins une fenêtre interactive F, c'est-à-dire une fenêtre qui comporte des objets sensibles 01 A, 01 B, 02, 03 (plages, valeurs alphanumériques, ...) qui sont associés respectivement à des fonctions particulières précisées ci-dessous et qui sont sensibles à la présence d'un curseur 10. Ledit curseur 10 peut être déplacé par un moyen approprié 11 précisé ci-dessous qui est actionnable par un opérateur de l'aéronef, de manière à pouvoir être amené sur un objet sensible afin de le désigner ou le marquer. Lorsqu'un objet sensible est désigné, c'est-à-dire lorsque le curseur 10 est amené sur lui, ledit objet sensible est marqué ou mis en évidence, en particulier par un changement d'apparence tel qu'un changement de couleur ou une surbrillance par exemple. Sur les figures 2 à 5, un tel changement d'apparence est illustré par un trait plus épais de l'objet sensible ainsi marqué. On dit que ledit objet sensible est alors muni d'un "marqueur d'objet" ou "focus". La validation (à l'aide d'un moyen approprié 12 actionnable) d'un objet sensible qui est muni d'un tel marqueur d'objet déclenche l'exécution de la fonction qui est associée audit objet sensible.

Pour ce faire, selon l'invention, lesdits premiers moyens de commande desdits moyens de révision 6 comportent un dispositif de commande de curseur 13. Ce dispositif de commande de curseur 13 qui est relié par une liaison 14 au calculateur 2 comprend :
- au moins un moyen de déplacement actionnable 11, de préférence une boule de commande, susceptible de déplacer le curseur 10 sur ladite fenêtre interactive F de manière à désigner un objet sensible ; et
- au moins un moyen de validation actionnable 12, par exemple un bouton-poussoir, susceptible de valider un objet sensible qui est désigné par l'intermédiaire dudit curseur 10 de manière à faire exécuter la fonction qui est associée audit objet sensible.

De plus, selon l'invention, lesdits moyens d'affichage 3 sont formés de sorte que la page de plan de vol PV, qui est susceptible d'être présentée sur ledit écran de visualisation 5, comporte de plus :
- au moins un signe caractéristique "Rev" indiquant un menu de révision ;
- des premiers objets sensibles 01 A et 01 B, qui correspondent à des objets sensibles relatifs à un menu de révision déroulant 15 et qui sont prévus au niveau dudit signe caractéristique Rev pour l'objet sensible 01 A et au niveau desdits points de route P1 à Pn pour les objets sensibles 01 B. La désignation et la validation d'un desdits premiers objets sensibles 01 A et 01 B commandent automatiquement le déroulement, sur la page de plan de vol PV, dudit menu de révision déroulant 15, comme représenté sur la figure 3 où l'objet sensible 01 A a été désigné et validé ; et
- des deuxièmes objets sensibles 02 qui sont associés respectivement à des pages de révision particulières et qui sont prévus sur ledit menu de révision 15 lorsqu'il est déroulé, comme représenté sur les figures 3 à 5. Ces pages de révision sont indiquées par des références R1 à Rp sur le menu de révision déroulant 15 des figures 3 à 5. La désignation et la validation d'un desdits deuxièmes objets sensibles 02 commandent automatiquement l'accès à la page de révision particulière (R1 à Rp) qui est associée à ce deuxième objet sensible 02, et à partir de laquelle on peut faire la révision envisagée.

Ainsi, grâce à l'invention, on peut accéder aux pages de révision à la fois par ledit signe caractéristique Rev et par lesdits points de route P1 à Pn, à partir de la page de plan de vol PV. De plus, cet accès est direct, sans passer par une page intermédiaire.

En outre, l'utilisation d'un menu (de révision) déroulant 15 présente un double avantage :
- lorsqu'il n'est pas déroulé, son encombrement sur la page de plan de vol PV est réduite audit signe caractéristique Rev (figure 2) ; et
- lorsqu'il est déroulé, il permet de faire apparaître un grand nombre de deuxièmes objets sensibles R1 à Rp, autorisant l'accès aux pages de révision (figures 3 à 5).

Par ailleurs, le dispositif 1 conforme à l'invention est facilement évolutif par de simples modifications logicielles. De plus, le nombre de commandes de fonctions différentes à partir d'une page n'est pas limité par des caractéristiques matérielles, telles que des "clés de ligne" par exemple.

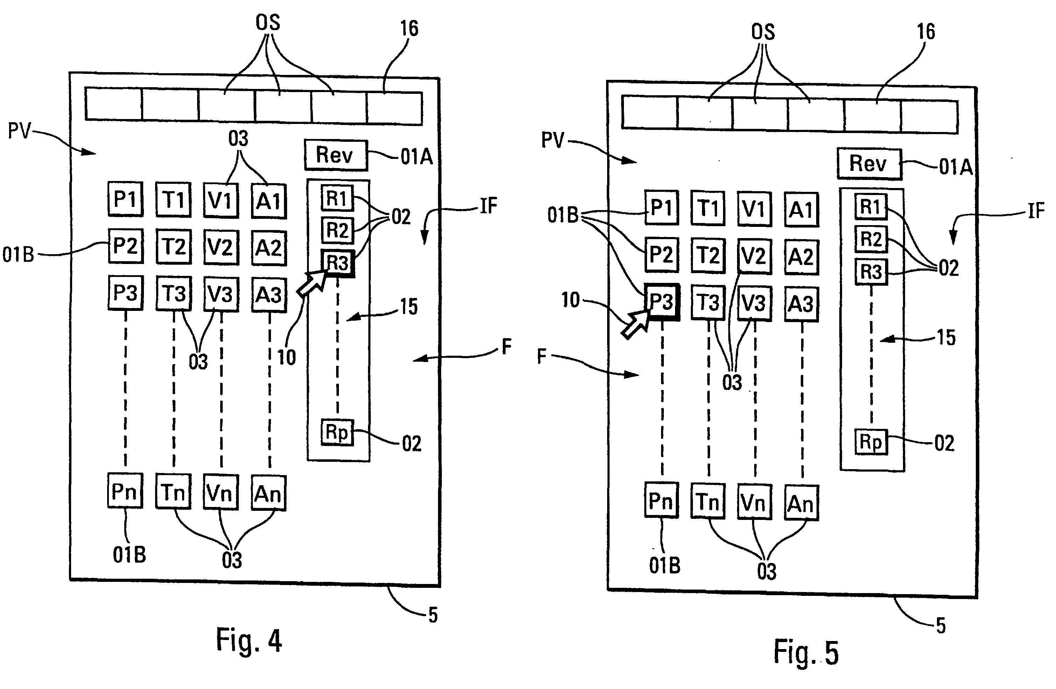

L'accès aux pages de révision (non représentées) à partir du signe caractéristique Rev est illustré sur les figures 2, 3 et 4, tandis que l'accès à partir d'un point de route est illustré sur les figures 5 et 4. En effet :
- sur la page de plan de vol PV montrée sur la figure 2, le curseur 10 est amené, par l'intermédiaire du moyen de déplacement 11, sur l'objet sensible 01 A situé au niveau du signe caractéristique Rev (indiquant le menu de révision) de manière à désigner cet objet sensible 01A ;
- à partir de cette position, une validation de cet objet sensible 01 A, par l'intermédiaire du moyen de validation 12, provoque le déroulement du menu de révision déroulant 15 et l'apparition des deuxièmes objets sensibles 02 au niveau d'indications R1 à Rp relatives à différentes pages de révision, comme représenté sur la figure 3 ; et
- lorsque le menu de révision 15 est déroulé, on peut désigner et valider un desdits deuxièmes objets sensibles 02, comme illustré pour l'objet sensible associé à la page de révision R3 sur la figure 4, ce qui entraîne alors l'apparition de la page de révision correspondante (non représentée) sur l'écran 5, à partir de laquelle on peut réaliser de façon usuelle la révision envisagée.

En outre, sur la figure 5, on a représenté la désignation et la validation de l'objet sensible 01 B associé au point de route P3 qui entraînent le déroulement du menu de révision 15. A partir de là, on peut désigner et valider un deuxième objet sensible 02, comme illustré sur la figure 4 et indiqué précédemment.

Lorsque l'on accède à une page de révision à partir du signe caractéristique Rev, aucun point de route n'est présélectionné (c'est-à-dire sélectionné par défaut). Un tel accès est intéressant, car parfois les révisions ne sont pas liées à un point de route particulier.

En revanche, lorsque l'on accède à une page de révision à partir d'un point de route P1 à Pn particulier, ce point de route est sélectionné par défaut dans la page de révision. Bien entendu, ce point de route peut être changé si nécessaire. Un tel accès est également intéressant, car il évite des erreurs de sélection ou de saisie du point de route.

Selon l'invention, la page de plan de vol PV comporte, de plus, des troisièmes objets sensibles 03 qui sont prévus au niveau d'au moins certaines desdites informations T1 à Tn, V1 à Vn et A1 à An concernant les points de route P1 à Pn et qui correspondent à des objets sensibles associés respectivement à des pages de révision particulières, à partir desquelles on peut directement réaliser la révision de ces informations T1 à Tn, V1 à Vn ou A1 à An. La désignation et la validation d'un desdits troisièmes objets sensibles 03, comme représenté à titre d'illustration avec le curseur 10 en traits interrompus qui désigne sur la figure 2 l'objet sensible 03 relatif à l'information T3, commandent automatiquement l'accès à la page de révision à partir de laquelle on peut réaliser la révision de l'information (T3) qui est associée à ce troisième objet sensible 03.

Ainsi, un opérateur (pilote, copilote, ...) peut désigner en une seule action, quel type de révision il veut entreprendre (révision du temps pour l'information T3) et sur quel point de route cette révision doit s'appliquer (point de route P3 pour l'information T3). Cet accès particulier aux pages de révision ne passe donc pas par le déroulement du menu déroulant 15.

Par conséquent, on réduit le nombre d'actions et on obtient une troisième manière d'accéder aux pages de révision.

Par ailleurs, la page de plan de vol PV comporte, de plus, des informations IF relatives à des segments entre des points de route P1 à Pn. De plus, les points de route P1 à Pn sont présentés successivement dans le même sens, de préférence de haut en bas, sur une colonne, comme représenté sur les figures 2 à 5, et lesdites informations IF sont présentées successivement dans le même sens (de haut en bas) sur une autre colonne, non représentée et située à droite du menu déroulant 15 sur les figures 2 à 5.

Ces colonnes peuvent être disposées de part et d'autre d'un synoptique vertical non représenté.

Ceci facilite la lecture et la compréhension du plan de vol, notamment par rapport à la présentation usuelle sur une console MCDU, où les informations sur un segment entre deux points de route sont présentées sur une ligne intermédiaire, entre deux lignes principales qui présentent des informations concernant respectivement ces deux points de route.

Le dispositif 1 conforme à l'invention peut ne pas être limité à la seule révision du plan de vol, mais peut être élargi à un système de dialogue SD permettant de réaliser sous la commande d'un opérateur une pluralité d'actions, dont ladite révision du plan de vol.

Dans ce cas, de préférence, ledit calculateur 2 et lesdits moyens d'affichage 3 sont formés de manière à afficher sur l'écran de visualisation 5, de façon permanente et indépendamment de la page qui est présentée sur ledit écran de visualisation 5, au moins une barre de menu 16 comportant une pluralité d'objets sensibles OS associés respectivement à des pages d'informations, telles que la page de plan de vol PV par exemple. La désignation et la validation d'un desdits objets sensibles OS commandent automatiquement un accès direct à la page d'informations qui est associée audit objet sensible OS.

Cette barre de menu 16, permanente et indépendante de la page qui est présentée sur l'écran 5, remplace les touches de fonction de la console MCDU, qui permettent d'accéder directement aux pages les plus fréquemment utilisées, mais qui sont limitées en nombre.

L'accès par une barre de menu 16 permet de s'affranchir de cette limitation et de prévoir un accès direct à un plus grand nombre de pages. De plus, l'utilisation d'une telle barre de menu 16 de type logiciel permet de faire évoluer la définition du système SD conforme à l'invention, par l'intermédiaire de simples modifications logicielles.

Le système de dialogue SD conforme à l'invention permet, de plus, de remplacer une console MCDU et de remédier à certains de ses inconvénients. En particulier :
A/On sait que le nombre d'actions possibles à partir d'une page MCDU est limité au nombre de "clés de ligne". A partir d'une page, les commandes, les saisies de données et les accès à d'autres pages, qui sont disponibles par appui sur une clé de ligne, sont désignés sur la ligne correspondant à la clé. L'accès à des informations ou à des commandes supplémentaires nécessite l'ouverture d'une nouvelle page, remplaçant la précédente. Une page contenant beaucoup de commandes contient par conséquent peu d'information et une page contenant beaucoup d'information ne peut proposer que peu de commandes. La présentation des informations d'une page est contrainte par cette mécanisation. Le nombre de pages est donc très important et la navigation entre les pages impose une arborescence complexe.
   Le remplacement des clés de ligne par des objets sensibles (01 A, 01 B, 02, 03), conformément à la présente invention, permet de s'affranchir de ces contraintes.
   En effet, par la désignation et la sélection d'objets sensibles, le pilote peut alors :
   ■ exécuter une commande système ;
   ■ saisir des données ;
   ■ accéder à d'autres pages ; et
   ■ accéder à des informations et des actions complémentaires sans changer de page.

   Au sein d'une même page, le nombre de commandes est donc moins limité. Leur emplacement peut être choisi n'importe où sur l'écran 5. L'arrangement des informations et des commandes dans les différentes pages n'est plus contraint par les caractéristiques matérielles de l'interface et est donc davantage guidé par des critères opérationnels et fonctionnels.
   De plus, une utilisation de panneaux à onglets ("tabpanels") permet de proposer l'accès à d'autres pages, tout en affichant les informations de la page courante.
   Cet objet graphique s'adapte très bien à l'organisation des informations :
   ■ par phase de vol (pages PERF par exemple) ;
   ■ par type d'information (accès à la base de données de navigation) ;
   ■ par type de commande (accès à différentes révisions du plan de vol).

   L'ensemble de cette mécanisation permet de limiter le nombre de pages dans l'interface et d'en simplifier la hiérarchie. La mémorisation de la hiérarchie des pages de dialogue par les pilotes est ainsi facilitée et l'apprentissage de l'interface est réduit.
B/ Sur une console MCDU, la disposition des informations est contrainte par un découpage matriciel de l'écran, la présence de "clés de ligne" et l'utilisation exclusive de caractères alphanumériques.
   L'utilisation conforme à l'invention d'interfaces graphiques et les degrés de liberté dans la position des objets sensibles sur l'écran de visualisation 5 permet de véhiculer plus de sens par la disposition des informations sur ledit écran de visualisation 5.
   La disposition des informations et l'utilisation de schémas, de synoptiques et de graphiques permettent de présenter ces informations conformément aux schémas mentaux usuels des pilotes.
   De plus, la disposition des informations est plus facile à corréler avec la représentation que le pilote se fait de l'avion dans son environnement.
   Elle peut aussi être cohérente avec d'autres formes de présentation dont dispose habituellement le pilote ("Navigation Display", documentation papier).
   En outre, l'utilisation de schémas et de synoptiques permet de guider la prise de connaissance de l'information. Par exemple, l'information peut être présentée par un schéma situant l'avion dans un plan de sa trajectoire.
C/ On sait que le temps de réaction de l'équipage d'un aéronef à une situation donnée est un critère important dans la qualité et la sécurité de la tâche de pilotage. L'efficacité de la prise de connaissance de la situation est alors primordiale.

Sur une console MCDU, toute l'information est transmise à l'équipage sous forme alphanumérique. Le pilote doit donc lire des valeurs, lire des états pour prendre connaissance de la situation de l'avion ou des systèmes qui le renseignent sur la situation de l'avion. C'est le cas notamment pour les informations de position de l'avion.

Sur le système de dialogue SD conforme à l'invention, des représentations graphiques permettent aux pilotes d'assimiler immédiatement les informations essentielles à la compréhension de la situation. Par exemple, une valeur numérique peut être représentée par une aiguille sur un cadran, un curseur sur une barre, un remplissage coloré d'une barre, ou toute autre représentation graphique adaptée et intuitive.

## Revendications

1. Dispositif de révision du plan de vol d'un aéronef, notamment d'un avion de transport, ledit dispositif (1) comportant au moins :
- des moyens d'affichage (3) susceptibles de présenter, sur au moins un écran de visualisation (5), une page de plan de vol (PV) comprenant un plan de vol qui comporte au moins des points de route (P1 à Pn) que doit survoler l'aéronef, ainsi que des informations (T1 à Tn, V1 à Vn, A1 à An) concernant ces points de route ; et
- des moyens de révision actionnables (6) permettant de réaliser une révision dudit plan de vol et comprenant au moins :
. des premiers moyens de commande (13) permettant d'accéder à des pages de révision, à partir desquelles on peut réaliser des révisions ; et
. des seconds moyens de commande (7, 13) pour réaliser ces révisions à partir desdites pages de révision,
ledit écran de visualisation (5) comportant au moins une fenêtre interactive (F), comprenant des objets sensibles (01 A, 01 B, 02, 03) à la présence d'un curseur, lesdits premiers moyens de commande (13) étant formés de manière à pouvoir désigner un objet sensible et le valider, et lesdits moyens d'affichage (3) étant formés de sorte que la page de plan de vol (PV) qui est susceptible d'être présentée sur ledit écran de visualisation (5) comporte de plus :
- au moins un signe caractéristique (Rev) indiquant un menu de révision ;
- des premiers objets sensibles (01 A, 01 B) qui correspondent à des objets sensibles relatifs à un menu de révision déroulant (15) et qui sont prévus au niveau desdits points de route (P1 à Pn) et dudit signe caractéristique (Rev), la désignation et la validation d'un desdits premiers objets sensibles (01 A, 01 B) commandant automatiquement le déroulement, sur la page de plan de vol (PV), dudit menu de révision déroulant (15) ; et
- des deuxièmes objets sensibles (02) qui correspondent à des objets sensibles associés respectivement à des pages de révision particulières et qui sont prévus sur ledit menu de révision (15) lorsqu'il est déroulé, la désignation et la validation d'un desdits deuxièmes objets sensibles (02) commandant automatiquement l'accès à la page de révision qui est associée à ce deuxième objet sensible.

2. Dispositif selon la revendication 1,
**caractérisé en ce que** lesdits moyens d'affichage (3) sont formés de sorte qu'une page de révision, à laquelle on accède par la désignation et la validation du premier objet sensible (01 A) qui est associé audit signe caractéristique (Rev) relatif au menu de révision, ne comporte aucun point de route présélectionné.

3. Dispositif selon l'une des revendications 1 et 2,
**caractérisé en ce que** lesdits moyens d'affichage (3) sont formés de sorte qu'une page de révision, à laquelle on accède par la désignation et la validation d'un premier objet sensible (01 B) qui est associé à un point de route particulier (P1 à Pn) dudit plan de vol, comporte une présélection de ce point de route (P1 à Pn).

4. Dispositif selon l'une quelconque des revendications précédentes,
**caractérisé en ce que** lesdits moyens d'affichage (3) sont formés de sorte que la page de plan de vol (PV) comporte, de plus, des troisièmes objets sensibles (03) qui sont prévus au niveau d'au moins certaines desdites informations (T1 à Tn, V1 à Vn, A1 à An) concernant les points de route (P1 à Pn) et qui correspondent à des objets sensibles associés respectivement à des pages de révision particulières à partir desquelles on peut réaliser la révision de ces informations, la désignation et la validation d'un desdits troisièmes objets sensibles (03) commandant automatiquement l'accès à la page de révision à partir de laquelle on peut réaliser la révision de l'information qui est associée à ce troisième objet sensible.

5. Dispositif selon l'une quelconque des revendications précédentes,
**caractérisé en ce que** lesdits moyens d'affichage (3) sont formés de sorte que la page de plan de vol (PV) comporte, de plus, des informations (IF) relatives à des segments entre des points de route et que les points de route (P1 à Pn) sont présentés successivement dans un même sens sur une première colonne, et lesdites informations (IF) sont présentées successivement dans le même sens sur une seconde colonne.

6. Dispositif selon l'une quelconque des revendications précédentes,
**caractérisé en ce que** lesdits premiers moyens de commande (13) comportent :
- au moins un moyen de déplacement actionnable (11), susceptible de déplacer un curseur (10) sur ladite fenêtre interactive (F) de manière à désigner un objet sensible (01 A, 01 B, 02, 03) ; et
- au moins un moyen de validation actionnable (12), susceptible de valider un objet sensible qui est désigné par l'intermédiaire dudit curseur (10) de manière à faire exécuter la fonction qui est associée audit objet sensible.

7. Système de dialogue d'aéronef, permettant de réaliser une pluralité d'actions, dont la révision du plan de vol,
**caractérisé en ce qu'**il comporte le dispositif de révision (1) du plan de vol spécifié sous l'une quelconque des revendications 1 à 6, et **en ce que** lesdits moyens d'affichage (3) sont formés de manière à afficher sur l'écran de visualisation (5), de façon permanente et indépendamment de la page qui est présentée sur ledit écran de visualisation (5), au moins une barre de menu (16) comportant une pluralité d'objets sensibles (OS) associés respectivement à des pages d'informations, la désignation et la validation d'un desdits objets sensibles (OS) commandant automatiquement un accès direct à la page d'informations qui est associée audit objet sensible (OS).

## Claims

1. Device for reviewing the flight plan of an aircraft, in particular of a transport plane, said device (1) including at least:
- display means (3) capable of depicting, on at least one presentation screen (5), a flight plan page (PV) comprising a flight plan which includes at least waypoints (P1 to Pn) which the aircraft must overfly, as well as information (T1 to Tn, V1 to Vn, A1 to An) relating to these waypoints; and
- actuatable means of review (6) making it possible to carry out a review of said flight plan and comprising at least:
• first means of control (13) making it possible to access review pages, from which reviews can be carried out; and
• second means of control (7, 13) for carrying out these reviews from said review pages,
said presentation screen (5) including at least one interactive window (F), comprising responsive objects (01A, 01B, 02, 03) in the presence of a cursor, said first means of control (13) being formed in such a way as to be able to designate a responsive object and enable it, and said display means (3) being formed in such a way that the flight plan page (PV) which is capable of being depicted on said presentation screen (5) furthermore includes:
- at least one characteristic sign (Rev) indicating a review menu;
- first responsive objects (01A, 01B) which correspond to responsive objects relating to a drop-down review menu (15) and which are provided at the level of said waypoints (P1 to Pn) and of said characteristic sign (Rev), the designating and the enabling of one of said first responsive objects (01A, 01B) automatically controlling the dropping down, over the flight plan page (PV), of said drop-down review menu (15); and
- second responsive objects (02) which correspond to responsive objects associated respectively with particular review pages and which are provided on said review menu (15) when it has dropped down, the designating and the enabling of one of said second responsive objects (02) automatically controlling access to the review page which is associated with this second responsive object.

2. Device according to Claim 1,
**characterized in that** said display means (3) are formed in such a way that a review page, which is accessed by designating and enabling the first responsive object (01A) which is associated with said characteristic sign (Rev) relating to the review menu, includes no preselected waypoint.

3. Device according to either of Claims 1 and 2,
**characterized in that** said display means (3) are formed in such a way that a review page, which is accessed by designating and enabling a first responsive object (01B) which is associated with a particular waypoint (P1 to Pn) of said flight plan, includes a preselection of this waypoint (P1 to Pn).

4. Device according to any one of the preceding claims,
**characterized in that** said display means (3) are formed in such a way that the flight plan page (PV) includes, in addition, third responsive objects (03) which are provided at the level of at least some of said information (T1 to Tn, V1 to Vn, A1 to An) relating to the waypoints (P1 to Pn) and which correspond to responsive objects associated respectively with particular review pages from which it is possible to carry out the review of this information, the designating and the enabling of one of said third responsive objects (03) automatically controlling access to the review page from which it is possible to carry out the review of the information which is associated with this third responsive object.

5. Device according to any one of the preceding claims,
**characterized in that** said display means (3) are formed in such a way that the flight plan page (PV) includes, in addition, information (IF) pertaining to segments between waypoints and **in that** the waypoints (P1 to Pn) are depicted successively in one and the same direction on a first column, and said information (IF) is depicted successively in the same direction on a second column.

6. Device according to any one of the preceding claims,
**characterized in that** said first means of control (13) include:
- at least one actuatable means of displacement (11), capable of displacing a cursor (10) over said interactive window (F) in such a way as to designate a responsive object (01A, 01B, 02, 03); and
- at least one actuatable enabling means (12), capable of enabling a responsive object which is designated by way of said cursor (10) in such a way as to cause the execution of the function which is associated with said responsive object.

7. Aircraft dialogue system, making it possible to carry out a plurality of actions, of which one is the reviewing of the flight plan,
**characterized in that** it includes the device (1) for reviewing the flight plan specified under any one of Claims 1 to 6, and **in that** said display means (3) are formed in such a way as to display on the presentation screen (5), permanently and independently of the page which is depicted on said presentation screen (5), at least one menu bar (16) including a plurality of responsive objects (OS) respectively associated with information pages, the designating and the enabling of one of said responsive objects (OS) automatically controlling direct access to the information page which is associated with said responsive object (OS).

## Patentansprüche

1. Vorrichtung für die Revision des Flugplans eines Flugzeuges, insbesondere eines Transportflugzeugs, wobei die genannte Vorrichtung (1) mindestens enthält:
- Anzeigemittel (3), die geeignet sind, auf mindestens einem Anzeigebildschirm (5) eine Flugplanseite (PV) anzuzeigen, welche einen Flugplan beinhaltet, der mindestens Routenpunkte (P1 bis Pn), die das Flugzeug überfliegen muss, sowie Informationen (T1 bis Tn, V1 bis Vn, A1 bis An) bezüglich dieser Routenpunkte enthält; und
- bedienbare Revisionsmittel (6), die eine Revision des genannten Flugplans ermöglichen und mindestens beinhalten:
• erste Bedienmittel (13), die es ermöglichen, auf Revisionsseiten zuzugreifen, von denen aus Revisionen vorgenommen werden können; und
• zweite Bedienmittel (7,13), um diese Revisionen von den genannten Revisionsseiten aus vorzunehmen,
wobei der genannte Anzeigebildschirm (5) mindestens ein interaktives Fenster (F) enthält, welches sensible Objekte (O1A, O1B, O2, O3) mit einem Cursor beinhaltet, wobei die genannten ersten Bedienmittel (13) so ausgebildet sind, dass sie ein sensibles Objekt bezeichnen und validieren können, und wobei die genannten Anzeigemittel (3) so ausgebildet sind, dass die Flugplanseite (PV), die auf dem genannten Anzeigebildschirm (5) angezeigt werden kann, außerdem enthält:
- mindestens ein Kennzeichen (Rev), welches ein Revisionsmenü bezeichnet;
- erste sensible Objekte (O1A, O1B), die sensiblen Objekten in einem Revisions-Pulldown-Menü (15) entsprechen, und die für die genannten Routenpunkte (P1 bis Pn) und das genannte Kennzeichen (Rev) vorgesehen sind, wobei die Bezeichnung und Validierung eines der genannten ersten sensiblen Objekte (O1A, O1B) automatisch das Aufklappen des genannten Revisions-Pulldown-Menüs (15) auf der Flugplanseite (PV) steuern; und
- zweite sensible Objekte (02), die sensiblen Objekten entsprechen, welche jeweils bestimmten Revisionsseiten zugeordnet sind, und welche im genannten Revisionsmenü (15) vorgesehen sind, wenn dieses aufgeklappt ist, wobei die Bezeichnung und Validierung eines der genannten zweiten sensiblen Objekte (02) automatisch den Zugriff auf die Revisionsseite steuern, welche diesem zweiten sensiblen Objekt zugeordnet ist.

2. Vorrichtung nach Anspruch 1,
**dadurch gekennzeichnet, dass** die genannten Anzeigemittel (3) so ausgebildet sind, dass eine Revisionsseite, auf die man durch die Bezeichnung und Validierung des ersten sensiblen Objektes (O1A) gelangt, welches dem genannten Kennzeichen (Rev) zum Revisionsmenü zugeordnet ist, keinen vorgewählten Routenpunkt enthält.

3. Vorrichtung nach einem der Ansprüche 1 und 2,
**dadurch gekennzeichnet, dass** die genannten Anzeigemittel (3) so ausgebildet sind, dass eine Revisionsseite, auf die man durch die Bezeichnung und Validierung eines ersten sensiblen Objektes (O1B) gelangt, welches einem bestimmten Routenpunkt (P1 bis Pn) des genannten Flugplans zugeordnet ist, eine Vorwahl dieses Routenpunktes (P1 bis Pn) enthält.

4. Vorrichtung nach einem der vorstehenden Ansprüche,
**dadurch gekennzeichnet, dass** die genannten Anzeigemittel (3) so ausgebildet sind, das die Flugplanseite (PV) weiterhin dritte sensible Objekte (03) enthält, die mindestens für bestimmte der genannten Informationen (T1 bis Tn, V1 bis Vn, A1 bis An) zu den Routenpunkten (P1 bis Pn) vorgesehen sind, und die sensiblen Objekten entsprechen, die jeweils bestimmten Revisionsseiten zugeordnet sind, von welchen aus die Revision dieser Informationen vorgenommen werden kann, wobei die Bezeichnung und Validierung eines der genannten dritten sensiblen Objekte (03) automatisch den Zugriff auf die Revisionsseite auslösen, von welcher aus die Revision der diesem dritten sensiblen Objekt zugeordneten Information vorgenommen werden kann.

5. Vorrichtung nach einem der vorstehenden Ansprüche,
**dadurch gekennzeichnet, dass** die genannten Anzeigemittel (3) so ausgebildet sind, dass die Flugplanseite (PV) des Weiteren Informationen (IF) zu den Segmenten zwischen den Routenpunkten enthält, und dass die Routenpunkte (P1 bis Pn) nacheinander in einer Richtung in einer ersten Spalte dargestellt sind, und die genannten Informationen (IF) nacheinander in derselben Richtung in einer zweiten Spalte aufgeführt sind.

6. Vorrichtung nach einem der vorstehenden Ansprüche,
**dadurch gekennzeichnet, dass** die genannten ersten Bedienungsmittel (13) enthalten:
- mindestens ein bedienbares Bewegungsmittel (11), das geeignet ist, einen Cursor (10) im genannten interaktiven Fenster (F) derart zu bewegen, dass ein sensibles Objekt (01A, 01B, 02, 03) bezeichnet wird; und
- mindestens ein bedienbares Validierungsmittel (12), das geeignet ist, ein sensibles Objekt, welches mit dem genannten Cursor (10) bezeichnet wird, zu validieren, so dass die dem genannten sensiblen Objekt zugeordnete Funktion ausgeführt wird.

7. Dialogsystem eines Flugzeugs, welches es gestattet, eine Vielzahl von Vorgängen, darunter die Revision des Flugplans, vorzunehmen,
**dadurch gekennzeichnet, dass** es die in einem der Ansprüche 1 bis 6 spezifizierte Vorrichtung (1) für die Revision des Flugplans enthält und dass die genannten Anzeigemittel (3) so ausgebildet sind, dass auf dem Anzeigebildschirm (5) permanent und unabhängig von der auf dem genannten Anzeigebildschirm (5) dargestellten Seite mindestens ein Menübalken (16) angezeigt wird, welcher eine Vielzahl von sensiblen Objekten (OS) enthält, die jeweils Informationsseiten zugeordnet sind, wobei die Bezeichnung und Validierung eines der genannten sensiblen Objekte (OS) automatisch einen direkten Zugriff auf die dem genannten sensiblen Objekt (OS) zugeordnete Informationsseite steuert.
